# EUROPÄISCHE PATENTSCHRIFT

(11) **EP 0 995 017 B1**
(45) Veröffentlichungstag und Bekanntmachung des Hinweises auf die Patenterteilung: **02.04.2003**
(21) Anmeldenummer: 98936184.5
(22) Anmeldetag: 17.06.1998
(51) Int. Cl.: F01N 3/20, B60K 15/063

(54) **TANK FÜR EIN FAHRZEUG MIT REDUKTIONSMITTELBETRIEBENER ABGAS-REINIGUNGSANLAGE**
TANK FOR A VEHICLE WITH A REDUCTION-AGENT-OPERATED EXHAUST FUME PURIFICATION SYSTEM
RESERVOIR DE CARBURANT POUR UN VEHICULE AVEC UN SYSTEME D'EPURATION DES GAZ D'ECHAPPEMENT A AGENT REDUCTEUR

(30) Priorität: 07.07.1997 DE 19729003
(43) Veröffentlichungstag der Anmeldung: 26.04.2000
(73) Patentinhaber: SIEMENS AKTIENGESELLSCHAFT, 80333 München (DE)
(72) Erfinder: WISSLER, Gerhard, D-93104 Sünching (DE); PAJONK, Günther, D-96199 Zapfendorf (DE); WEIGL, Manfred, D-93161 Sinzing (DE); HOFMANN, Lothar, D-96264 Altenkunstadt (DE)
(86) Internationale Anmeldenummer: DE9801639
(87) Internationale Veröffentlichungsnummer: WO99002825

(56) Entgegenhaltungen:
- DE-A- 3 501 094
- DE-A- 3 830 045
- US-A- 3 827 238
- PATENT ABSTRACTS OF JAPAN vol. 017, no. 226 (M-1405), 10. Mai 1993 & JP 04 358716 A (ISUZU MOTORS LTD), 11. Dezember 1992

## Beschreibung

Die Erfindung bezieht sich auf einen Kraftstoffraum für die Bevorratung von Kraftstoff, der zum Betrieb einer Verbrennungskraftanlage vorgesehen ist, die mit einer mit einem Reduktionsmittel betreibbaren Abgas-Reinigungsanlage für die Reinigung ihres Abgases ausgerüstet ist, wobei für die Bevorratung des Reduktionsmittels ein Reduktionsmittelraum vorgesehen ist.

In der DE 35 01 094 A1 ist ein Doppelrohrkatalysator für Verbrenungskraftmotoren offenbart. Der Verbrennungskraftmotor ist hierbei sowohl mit bleifreiem als auch mit bleihaltigem Kraftstoff betreibbar. Hierzu wird der Verbrennungsmotor mit dem jeweiligen Kraftstoff aus einem Doppeltank versorgt. Der Doppeltank besteht aus einem herkömmlichen Stahltank, in dessen Inneren ein zweiter sogenannter Plastikbeutel-Tank untergebracht ist. Der besondere Vorteil besteht hier darin, dass mit dem Tank sowohl bleifreier als auch bleihaltiger Kraftstoff getankt werden kann. Die ständige Kraftstoffbenennung ist erforderlich, da bei häufigem Wechsel auf verbleites Benzin der Katalysator erheblich gefährdet wäre, da bei nur einem Tankraum bei einem Wechsel des Kraftstoffs üblicherweise Rückstände von einigen Litern des anderen Kraftstoffs vorhanden sind.

Aus der DE 38 30 045 A geht eine Diesel-Brennkraftmaschine mit einer Ansaugleitung, einer Kraftstoffzuführung und einer Abgasanlage zu einem zeolithischen Katalysator und von diesem zu einem Oxidationskatalysator. In Strömungsrichtung vor dem Zeolithkatalysator liegt eine Zugabevorrichtung für ein Harnstoff enthaltendes oder vollständig aus Harnstoff bestehendes Reduktionsmittel. Dieses ist in flüssiger Form in dem Tank gespeichert und wird über eine Pumpe nach Zersetzung mittels einer nur im Kaltstart wirksamen Heizeinrichtung in die Zugabevorrichtung gefördert. Bei warmer Maschine erfolgt die Zersetzung der Harnstoffe durch das heiße Abgas.

Eine reduktionsmittelbetriebene Abgas-Reinigungsanlage ist beispielsweise aus dem Siemens-Firmenprospekt "SiNOx-Stickoxidminderung für stationäre Dieselmotoren", Bestell-Nr. A96001-U91-A232, Siemens AG, Berlin und München, bekannt. Hierbei handelt es sich um eine Anlage, die auf dem SCR (Selective Catalytic Reduction)-Verfahren basiert. Dieses Verfahren nutzt die Tatsache, daß Stickoxide oder Harnstoff, an geeigneten Katalysatoren zu Stickstoff und Wasser umgesetzt werden. Dazu werden die Abgase unter genau dosierter Zugabe des Reduktionsmittels durch den SCR-Katalysator geleitet, der in die Abgasleitung integriert ist.

Bei einer reduktionsmittelbetriebenen Abgas-Reinigungsanlage, die mit einer Abgas liefernden Verbrennungskraftanlage (z.B. einem Dieselmotor auf einem Kraftfahrzeug) zusammenarbeitet, ist die Bevorratung des Reduktionsmittels in einem Vorratsbehälter, Tank oder Reduktionsmittelraum erforderlich. Dieser Raum war bisher in einiger Entfernung und getrennt vom Kraftstoffraum, der zu Bevorratung des Kraftstoffs für die Verbrennungsanlage vorgesehen ist, angeordnet. Ein festes Reduktionsmittel, wie z.B. Harnstoff, ist dabei u.a. aus Gründen einer guten Dosierbarkeit in einer Flüssigkeit, z.B. in Wasser, gelöst. Derartige Reduktionsmittel-Lösungen kristallisieren und erstarren bei Temperaturen, die im Fahrzeug und bei Außenaufstellung des Reduktionsmittel-Tanks unterschritten werden können. Beispielsweise erstarrt eine 32,5%-ige Harnstoff-Wasser-Lösung bei -11 °C. Eine eingefrorene oder erstarrte Lösung kann nicht mehr gefördert werden, und das Abgas wird in einem solchen Fall nicht gereinigt.

Insbesondere bei einem Fahrzeug, bei dem eine solche reduktionsmittelbetriebene Abgas-Reinigungsanlage eingesetzt wird, besteht die Notwendigkeit der Unterbringung des Vorratsbehälters für das Reduktionsmittel. Bisher wurde ein zusätzlicher Reduktionsmittel-Tank mit separaten Haltern am Fahrzeug angebaut, nachdem der erforderliche Platz durch das Versetzen anderer Bauteile verfügbar gemacht wurde. Nun besteht das Bedürfnis, den (insbesondere in einem Fahrzeug) knapp bemessenen Einbauraum möglichst gut für die Bevorratung des Kraftstoffs und auch des Reduktionsmittels auszunutzen und die Befestigung zu vereinfachen.

Ein Aspekt ist es, einen Kraftstoffraum der eingangs genannten Art derart auszugestalten, daß seine Befestigung und die Befestigung des Reduktionsmittelraums besonders einfach wird.

Das gelingt dadurch, daß der Kraftstoffraum mit dem Reduktionsmittelraum in einer Baueinheit zusammengefaßt ist. Dann läßt sich die Baueinheit als Ganzes durch mindestens einen Halter z.B. an einem Fahrzeug befestigen.

Um also den Anbau eines zusätzlichen Tanks für das Reduktionsmittel am Fahrzeug zu vermeiden, sind vorliegend der Kraftstofftank und der Reduktionsmitteltank zu einer Einheit verbunden, die entsprechend einem einzigen Tank befestigt werden kann. Durch die Zusammenführung der beiden bisher getrennten Tanks läßt sich der in einem Fahrzeug knapp bemessene Einbauraum gut ausnutzen, und die Befestigung wird besonders einfach. Gleichzeitig wird der Gefahr des Einfrierens des in Lösung vorliegenden Reduktionsmittels entgegengewirkt, weil die mit der Umgebung in unmittelbarer Berührung stehenden Wände des Reduktionsmittelraums gegenüber der bisherigen Zwei-Tank-Lösung reduziert sind. Der sich im Kraftstoffraum befindliche Kraftstoff, der an zumindest eine Wand des Reduktionsmittelraums angrenzt oder diesen umgibt, kann in diesem Fall auch zur Aufheizung des Reduktionsmittelraums und damit zum Auftauen des in Lösung vorliegenden Reduktionsmittels genutzt werden.

Weiter vorteilhafte konstruktive Ausgestaltungen sind in den Unteransprüchen beschrieben.

Ausführungsbeispiele der Erfindung werden im folgenden anhand von drei Figuren näher erläutert. Es zeigen:
- FIG 1: ein gemeinsames Gehäuse, in dem ein Reduktionsmittel-Tank von einem daneben angeordneten Kraftstoff-Tank durch eine Trennwand getrennt ist,
- FIG 2: einen Reduktionsmittel-Tank in einem Kraftstoff-Tank, und
- FIG 3: einen Reduktionsmittel-Tank als Beutel in einem Kraftstoff-Tank.

Gleiche Bauteile sind in den Figuren mit denselben Bezugszeichen versehen.

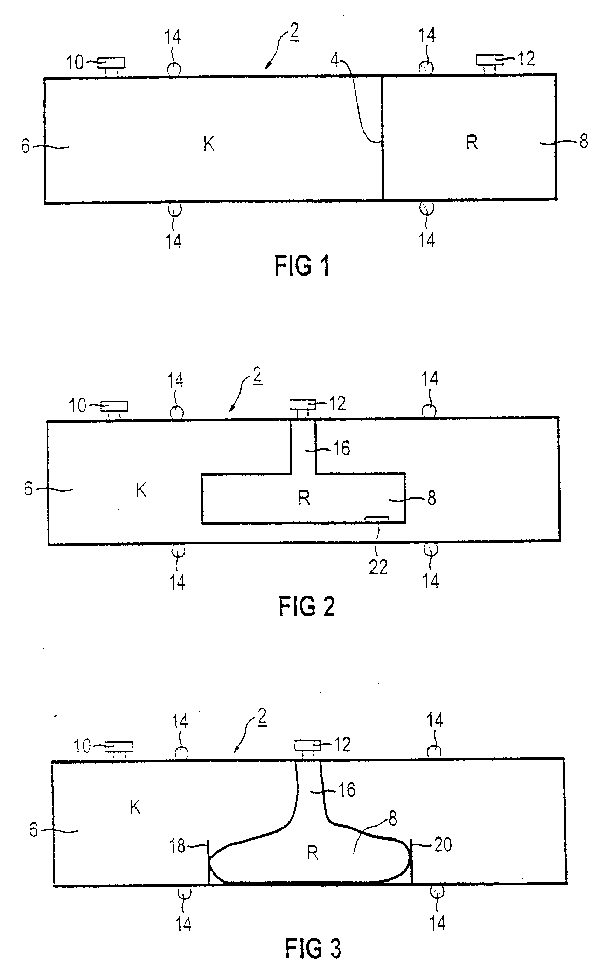

Gemäß Figur 1 ist ein gemeinsames Gehäuse oder eine Baueinheit 2 von quaderförmiger oder zylindrischer Gestalt vorgesehen, die infolge der Anordnung einer festen Trennwand 4 einen Kraftstoffraum 6 für die Bevorratung eines Kraftstoffs K und einen Reduktionsmittelraum 8 für die Bevorratung eines Reduktionsmittels R aufweist. Der Kraftstoffraum 6 besitzt an seiner Oberseite einen Zugangsstutzen 10 für die Zufuhr und/oder Abfuhr des Kraftstoffs K, und der Reduktionsmittelraum 8 besitzt an seiner Oberseite einen Zugangsstutzen 12 für die Zufuhr und/oder Abfuhr des Reduktionsmittels R. Der Kraftstoff K dient zum Betrieb einer Verbrennungskraftanlage, insbesondere im vorliegenden Beispiel in Form von Dieselkraftstoff zum Betrieb eines Dieselmotors auf einem Fahrzeug. Das Reduktionsmittel R wird zum Eindüsen in einer Abgas-Reinigungsanlage, die nach dem SCR-Prinzip arbeitet, verwendet. Es dient somit für die Reinigung des Abgases der Verbrennungskraftanlage. Die Baueinheit 2 kann entsprechend einem einzigen Tank auf oder an der Betriebseinheit, im vorliegenden Beispiel also auf oder an dem Kraftfahrzeug, befestigt werden. Dazu sind Halter 14 der bei Kraftfahrzeugen üblichen Ausführungsform vorgesehen.

Bei der Ausführungsform nach Figur 1 sind der Kraftstoffraum 6 und der Reduktionsmittelraum 8 nebeneinander angeordnet. Sie sind durch die gemeinsame Wand 4 getrennt. Diese besteht bevorzugt aus einem gut wärmeleitenden Metall. Dadurch ist gewährleistet, daß der im Betrieb wärmere oder beim Startvorgang aufgewärmte Kraftstoff K Wärme an das Reduktionsmittel R abgeben kann, so daß dieses entweder am Einfrieren gehindert oder gegebenenfalls aufgetaut wird.

Nach Figur 2 ist der Reduktionsmittelraum 8 innerhalb des Kraftstoffraums 6 angeordnet. Der Reduktionsmittelraum 8 besitzt hier dazu Wände aus Metall. Er kann auch hier, ebenso wie der Kraftstoffraum 6, zylindrisch ausgebildet sein. Der Reduktionsmittelraum 8 ist im Kraftstoffraum 6 mit Hilfe eines rohrförmigen Zugangs 16 aufgehängt. Natürlich ist auch eine quaderförmige Ausbildung von Kraftstoffraum 6 und/oder Reduktionsmittelraum 8 möglich.

Auch bei der Ausführungsform nach Figur 2 ist darauf geachtet, daß ein guter Wärmeübergang zwischen dem Kraftstoffraum 6 und dem Reduktionsmittelraum 8 besteht. Dazu sind die Wände des Reduktionsmittelraums 8, zumindest aber eine seiner Wände, gut wärmeleitend ausgebildet. Diese Wand oder diese Wände bestehen bevorzugt aus einem Metall guter Wärmeleitfähigkeit.

Aus der Ausführungsform von Figur 3 ist ersichtlich, daß auch hier der Reduktionsmittelraum 8 innerhalb des Kraftstoffraums 6 angeordnet ist. Hier besitzt der Reduktionsmittelraum 8 speziell flexible Wände. Er ist als Beutel ausgebildet. Dieser Beutel ist durch zwei seitliche Haltewände 18, 20 etwa im mittleren Teil des Kraftstoffraums 6 gehalten. Der Reduktionsmittelraum 8 ist auch hier wieder über einen Zugang 16 mit einem Zugangsstutzen 12 an der Oberseite der Baueinheit 2 verbunden.

Um sicherzustellen, daß das Reduktionsmittel R im Reduktionsmittelraum 8 nicht einfriert und/oder nach Einfrieren leicht wieder aufgetaut werden kann, kann zusätzlich eine in Figur 2 gezeigte Heizung 22 vorgesehen sein. Diese Heizung 22 kann insbesondere eine elektrische Heizung sein. Die Anordnung einer solchen Heizung 22 kann insbesondere auf einem Fahrzeug von Vorteil sein, bei dem als Reduktionsmittel R eine wäßrige Harnstofflösung verwendet wird.

Zusammenfassend läßt sich folgendes festhalten: Durch die Umhüllung des Reduktionsmittelraums 8 mit Kraftstoff K gemäß Figuren 2 und 3 wird die Gefahr des Einfrierens vermindert. Da in einem Fahrzeug der Dieselkraftstoff K über Vor- und Rücklauf zur Kühlung von Motorteilen, z.B. für die Förderpumpe oder für ein Steuergerät, genutzt wird, erfolgt eine leichte Temperaturanhebung des Dieselkraftstoffs K während des Betriebes, die zur Anhebung der Temperatur im gesamten Tank, also in der gesamten Baueinheit 2, beiträgt.

Neben der erwähnten direkten Beheizung des Reduktionsmittels R kann durch die temperaturabhängige Heizung des zum Kraftstoffraum 6 rückfließenden Dieselkraftstoffs K das Temperaturniveau des gesamten Inhalts der Baueinheit 2 angehoben werden. Dadurch wird dem Einfrieren des in Lösung vorliegenden Reduktionsmittels R vorgebeugt. Das Auftauen der eingefrorenen Lösung, z.B. nach längerem Stillstand bei tiefen Umgebungstemperaturen, kann dadurch ebenfalls unterstützt werden.

Die in Figur 3 dargestellte Ausführungsform mit einem Beutel als Reduktionsmittelraum 8 oder Harnstofflösungstank hat den Vorteil, daß die Volumenausdehnung beim Einfrieren der Lösung keine Schäden an den Bauteilen hervorrufen kann.

## Patentansprüche

1. Verbrennungsanlage mit einer mit einem Reduktionsmittel (R) betreibbaren Abgas-Reinigungsanlage, mit einem Kraftstoffraum (6) zur Bevorratung von Kraftstoff (K), der zum Betrieb der Verbrennungskraftanlage vorgesehen ist, und mit einem Reduktionsmittelraum (8) zur Bevorratung von Reduktionsmittel (R),
**dadurch gekennzeichnet, daß** der Kraftstoffraum (6) und der Reduktionsmittelraum (8) in einer Baueinheit zusammengefaßt sind, und daß der Kraftstoffraum (6) und der Reduktionsmittelraum (8) durch eine gemeinsame Wand (4) getrennt sind, so daß zwischen Kraftstoffraum (6) und Reduktionsmittelraum (8) ein guter Wärmeübergang besteht,
wodurch während des Betriebs angewärmter Kraftstoff Wärme an das Reduktionsmittel (R) abgibt.

2. Verbrennungskraftanlage nach Anspruch 1,
**dadurch gekennzeichnet, daß** die Baueinheit (2) als Ganzes durch mindestens einen Halter (14) an einem Fahrzeug befestigbar ist.

3. Verbrennungskraftanlage nach Anspruch 1 oder 2,
**dadurch gekennzeichnet, daß** die gemeinsame Wand (4) aus einem gut wärmeleitenden Metall besteht.

4. Verbrennungskraftanlage nach einem der Ansprüche 1 bis 3,
**dadurch gekennzeichnet, daß** in dem Kraftstoffraum (6) der Reduktionsmittelraum (8) angeordnet ist.

5. Verbrennungskraftanlage nach einem der Ansprüche 1 bis 4,
**dadurch gekennzeichnet, daß** der Reduktionsmittelraum (8) steife Wände besitzt.

6. Verbrennungskraftanlage nach Anspruch 4 oder 5,
**dadurch gekennzeichnet, daß** in dem Kraftstoffraum (6) der Reduktionsmittelraum (8) aufgehängt ist.

7. Verbrennungskraftanlage nach einem der Ansprüche 1 bis 6,
**dadurch gekennzeichnet, daß** der Kraftstoffraum (6) ebenso wie der Reduktionsmittelraum (8) zylindrisch oder quaderförmig ausgebildet ist.

8. Verbrennungskraftanlage nach Anspruch 7,
**dadurch gekennzeichnet, daß** zumindest eine Wand aus einem Metall besteht.

9. Verbrennungskraftanlage nach einem der Ansprüche 1 bis 6,
**dadurch gekennzeichnet, daß** der Reduktionsmittelraum (8) flexible Wände besitzt.

10. Verbrennungskraftanlage nach Anspruch 9,
**dadurch gekennzeichnet, daß** der Reduktionsmittelraum (8) als Beutel ausgebildet ist.

11. Verbrennungskraftanlage nach Anspruch 10,
**dadurch gekennzeichnet, daß** dem Kraftstoffraum (6) mindestens eine seitliche Haltewand (18, 20) für den Beutel vorgesehen ist.

12. Verbrennungskraftanlage nach einem der Ansprüche 1 bis 11, **dadurch gekennzeichnet, daß** der Reduktionsmittelraum (8) an seiner Oberseite einen Zugangsstutzen (12) besitzt .

13. Verbrennungskraftanlage nach einem der Ansprüche 1 bis 12, **dadurch gekennzeichnet, daß** für den Reduktionsmittelraum (8) eine Heizung (22) vorgesehen ist.

14. Verbrennungskraftanlage nach einem der Ansprüche 1 bis 13, **dadurch gekennzeichnet, daß** als Reduktionsmittel (R) Harnstofflösung vorgesehen ist.

15. Verbrennungskraftanlage nach einem der Ansprüche 1 bis 14,
**gekennzeichnet durch** eine Ausgestaltung als Dieselmotor.

16. Fahrzeug mit einer Verbrennungskraftanlage nach einem der vorhergehenden Ansprüche.

## Claims

1. Combustion system with an exhaust gas purification system capable of being operated with a reduction agent (R), with a fuel space (6) for the storage of fuel (K), provided for operating the internal combustion system, and with a reduction agent space (8) for storing reduction agent (R), **characterized in that** the fuel space (6) and the reduction agent space (8) are combined in a structural unit, and **in that** the fuel space (6) and the reduction agent space (8) are separated by a common wall (4), so that there is good heat transmission between the fuel space (6) and reduction agent space (8), with the result that fuel warmed up during operation discharges heat to the reduction agent (R).

2. Internal combustion system according to Claim 1, **characterized in that** the structural unit (2) can be fastened as a whole to a vehicle by means of at least one holder (14).

3. Internal combustion system according to Claim 1 or 2, **characterized in that** the common wall (4) consists of a metal having high thermal conductivity.

4. Internal combustion system according to one of Claims 1 to 3, **characterized in that** the reduction agent space (8) is arranged in it (Figures 2 and 3).

5. Internal combustion system according to one of Claims 1 to 4, **characterized in that** the reduction agent space (8) possesses rigid walls.

6. Internal combustion system according to Claim 4 or 5, **characterized in that** the reduction agent space (8) is suspended in it.

7. Internal combustion system according to one of Claims 1 to 6, **characterized in that** the fuel space (6) has a cylindrical or parallelepipedic design in the same way as the reduction agent space (8).

8. Internal combustion system according to Claim 7, **characterized in that** at least one wall preferably consists of a metal.

9. Internal combustion system according to one of Claims 1 to 6, **characterized in that** the reduction agent space (8) possesses flexible walls.

10. Internal combustion system according to Claim 9, **characterized in that** the reduction agent space (8) is designed as a pouch.

11. Internal combustion system according to Claim 10, **characterized in that** at least one lateral holding wall (18, 20) for the pouch is provided in the fuel space (6).

12. Internal combustion system according to one of Claims 1 to 11, **characterized in that** the reduction agent space (8) possesses, on its top side, an access connection piece (12).

13. Internal combustion system according to one of Claims 1 to 12, **characterized in that** a heating device (22) is provided for the reduction agent space (8).

14. Internal combustion system according to one of Claims 1 to 13, **characterized in that** a urea solution is provided as the reduction agent (R).

15. Internal combustion system according to one of Claims 1 to 14, **characterized by** a configuration as diesel engine.

16. Vehicle with an internal combustion system according to one of the preceding claims.

## Revendications

1. Système de combustion, comprenant un système d'épuration des gaz d'échappement qui peut être alimenté en un agent (R) réducteur, comprenant une chambre (6) pour du carburant afin de mettre en réserve du carburant (K), qui est prévu pour alimenter le système à combustion interne, et comprenant une chambre (8) pour un agent réducteur qui est prévue pour mettre en réserve de l'agent (R) réducteur,
**caractérisé en ce que** la chambre (6) pour le carburant et la chambre (8) pour l'agent réducteur sont rassemblées en une unité de construction, et **en ce que** la chambre (6) pour le carburant et la chambre (8) pour l'agent réducteur sont séparées par une cloison (4) commune de façon à avoir un bon transfert de chaleur entre la chambre (6) pour le carburant et la chambre (8) pour l'agent réducteur, de sorte que du carburant réchauffé pendant le fonctionnement cède de la chaleur à l'agent (R) réducteur.

2. Système à combustion interne suivant la revendication 1,
**caractérisé en ce que** l'unité (2) de construction peut être fixée dans son ensemble à un véhicule par au moins une fixation (14).

3. Système à combustion interne suivant la revendication 1 ou 2,
**caractérisé en ce que** la paroi (4) commune est en un métal bon conducteur de la chaleur.

4. Système à combustion interne suivant l'une des revendications 1 à 3,
**caractérisé en ce que** la chambre (8) pour l'agent réducteur est disposée dans la chambre (6) pour le carburant.

5. Système à combustion interne suivant l'une des revendications 1 à 4,
**caractérisé en ce que** la chambre (8) pour l'agent réducteur a des parois rigides.

6. Système à combustion interne suivant la revendication 4 ou 5,
**caractérisé en ce que** la chambre (8) pour l'agent réducteur est suspendue dans la chambre (6) pour le carburant.

7. Système à combustion interne suivant l'une des revendications 1 à 6,
**caractérisé en ce que** la chambre (6) pour le carburant est constituée tout comme la chambre (8) pour l'agent réducteur de manière cylindrique ou parallélépipédique.

8. Système à combustion interne suivant la revendication 7,
**caractérisé en ce qu'**au moins une paroi est en un métal.

9. Système à combustion interne suivant l'une des revendications 1 à 6,
**caractérisé en ce que** la chambre (8) pour l'agent réducteur a des parois souples.

10. Système à combustion interne suivant la revendication 9,
**caractérisé en ce que** la chambre (8) pour l'agent réducteur est constituée sous la forme d'un sac.

11. Système à combustion interne suivant la revendication 10,
**caractérisé en ce qu'**il est prévu pour la chambre (6) pour le carburant au moins une paroi (18, 20) latérale de maintien du sac.

12. Système à combustion interne suivant l'une des revendications 1 à 11,
**caractérisé en ce que** la chambre (8) pour l'agent réducteur a sur sa face supérieure une tubulure (12) d'accès.

13. Système à combustion interne suivant l'une des revendications 1 à 12,
**caractérisé en ce qu'**il est prévu un chauffage (22) pour la chambre (8) pour l'agent réducteur.

14. Système à combustion interne suivant l'une des revendications 1 à 13,
**caractérisé en ce qu'**il est prévu une solution d'urée comme agent (R) réducteur.

15. Système à combustion interne suivant l'une des revendications 1 à 14,
**caractérisé par** une conformation en moteur diesel.

16. Véhicule ayant un système à combustion interne suivant l'une des revendications précédentes.
